(19) **Europäisches Patentamt / European Patent Office / Office européen des brevets**

(11) **EP 2 890 105 B1**

(12) **EUROPEAN PATENT SPECIFICATION**

(45) Date of publication and mention
of the grant of the patent:
**15.03.2017 Bulletin 2017/11**

(51) Int Cl.:
*H04N 1/387* (2006.01)   *G06T 3/40* (2006.01)
*G06T 7/00* (2017.01)

(21) Application number: **14200009.0**

(22) Date of filing: **23.12.2014**

(54) **Method, apparatus and terminal for generating thumbnail of image**

Verfahren, Vorrichtung und Endgerät zur Erzeugung von Miniaturansichten eines Bildes

Procédé, appareil et terminal permettant de générer la vignette d'une image

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.12.2013 CN 201310743545**

(43) Date of publication of application:
**01.07.2015 Bulletin 2015/27**

(73) Proprietor: **Xiaomi Inc.
Beijing 100085 (CN)**

(72) Inventors:
• **Wang, Lin**
**100085 Haidian District Beijing (CN)**
• **Zhang, Qishen**
**100085 Haidian District Beijing (CN)**
• **Zhang, Bo**
**100085 Haidian District Beijing (CN)**

(74) Representative: **Sadler, Peter Frederick
Reddie & Grose LLP
16 Theobalds Road
London WC1X 8PL (GB)**

(56) References cited:
**WO-A1-2013/069341**

• **VAQUEROA ET AL:** "A survey of image retargeting techniques", PROCEEDINGS OF SPIE, S P I E - INTERNATIONAL SOCIETY FOR OPTICAL ENGINEERING, US, vol. 7798, 1 January 2010 (2010-01-01), pages 779814-1, XP009144529, ISSN: 0277-786X ISBN: 978-1-62841-388-5
• **SUH BONGWON ET AL:** "Automatic thumbnail cropping and its effectiveness", PROCEEDINGS OF THE 16TH ANNUAL ACM SYMPOSIUM ON USER INTERFACE SOFTWARE AND TECHNOLOGY : VANCOUVER, CANADA, NOVEMBER 2 - 5, 2003; [ACM SYMPOSIUM ON USER INTERFACE SOFTWARE AND TECHNOLOGY], ACM PRESS, NEW YORK, NY, vol. 5, no. 2, 1 January 2003 (2003-01-01) , pages 95-104, XP002367824, DOI: 10.1145/964696.964707 ISBN: 978-1-58113-636-4

**Description**

TECHNICAL FIELD

The present disclosure generally relates to the field of communication, and particularly, to a method, an apparatus and a terminal for generating a thumbnail of an image.

BACKGROUND

With the realization of technologies such as self-timer, continuous shooting with a mobile device, etc., in recent years, the capacity of a personal album in the mobile device is in rapidly growing. Typically, a thumbnail will be generated for a stored image in the personal album, and be put in a preview mode for the user to preview and review. Currently, a common method for generating a thumbnail of an image is directly intercepting a middle part of the image and scaling the intercepted middle part to obtain the thumbnail of the image. The advantage of this method is very efficient.

However, the above method only takes spatial position information about the image into account, and does not consider content information about the image, which means that the generated thumbnail cannot express the content information about the original image. For example, in a case that a position of a figure in an image deflects to a side, if only a middle part of the image is intercepted, the generated thumbnail may only include a part of the figure, which means that the accuracy of expressing the content information of the original image is rather poor.

PCT application WO 2013/069341 describes an image processing method in which a thumbnail for an image is generated by scanning a trimming candidate area across a target image. A calculation unit calculates, with respect to each of the plurality of trimming candidate areas, a total value of edge amounts of pixels in the trimming candidate area using, for example, a Sobel filter. The appropriate trimming area is selected based on the total value T of the edge amounts of the pixels in each of the trimming candidate areas. A gauss function G serves as a weight for the edge amount of each pixel. A larger weight is set for a pixel in the middle part in the trimming candidate area than that for a pixel in a boundary part of the trimming candidate area. This results in a larger weighted total value T with respect to a larger edge amount of a pixel in the middle part in the trimming candidate area.

The article "Automatic Thumbnail Cropping and its Effectiveness" by Bongwon Suh et al describes a study of cropping techniques that detect salient portions of images using the Itti and Koch saliency algorithm, and also describes the use of face recognition. The article "A survey of image retargeting techniques" by Daniel Vaquero et al reviews and categorizes image resizing operators, including looking at techniques for estimating where important regions of an image are located.

SUMMARY

The invention is defined in the claims, to which reference is now directed. Preferred features are set out in the dependent claims.

In view of the above, the present disclosure is to provide a method and an apparatus for generating a thumbnail of an image, to improve the accuracy of expressing the content information of an original image by the thumbnail. The solution is as follows.

According to a first aspect, a method for generating a thumbnail of an image is provided, including:

filtering an image to obtain an edge intensity value for each pixel point in the image;

calculating (302, 402) a spatial position attention value of each pixel point in the image by using the following attention model:

$$P(i,j) = \exp\left(\frac{-(i-X_c)^2 - (j-Y_c)^2}{2*\sigma^2}\right)$$

wherein (i,j) represents any one pixel point in the image; P(i,j) represents the spatial position attention value of the pixel point; $(X_c, Y_c)$ represents the center point of the image; and $\sigma$ represents a preset coefficient;

calculating the distribution value of information amount of each pixel point in the image by using the following distribution model of information amount:

$$I(i,j) = E(i,j) * P(i,j)$$

wherein (i,j) represents any one pixel point in the image; **I(i,j)** represents the distribution value of information amount of the pixel point; **E(i,j)** represents the edge intensity value of the pixel point; and **P(i,j)** represents the spatial position attention value of the pixel point;

slidingly searching on the image by a preset rectangular box, and for the rectangular box in each slidingly searched position, calculating a distribution value of information amount in the rectangular box according to the edge intensity values of the pixel points therein;

for the rectangular box in each slidingly searched position, summarizing the distribution values of information amount of all the pixel points in the rectangular box to obtain the distribution value of information amount in the rectangular box; and

selecting the rectangular box with the largest distribution value of information amount, and intercepting or obtaining content of an image corresponding to the selected rectangular box to obtain a thumbnail of the image.

Wherein, optionally, the summarizing the distribution values of information amount of all the pixel points in the rectangular box to obtain the distribution value of information amount in the rectangular box, includes:

calculating a weight value corresponding to each pixel point in the rectangular box by using a previously selected kernel function; and

multiplying the distribution value of information amount of each pixel point in the rectangular box by the corresponding weight value and then summarizing the weighted distribution values of information amount, to obtain the distribution value of information amount in the rectangular box; wherein the closer the pixel is to the center point of the image, the larger the weight value will be taken by the kernel function.

Wherein, optionally, the rectangular box is a square, and a length of a side thereof equals to a short side of the image.

Wherein, optionally, the filtering the image to obtain the edge intensity value for each pixel point in the image, includes:

compressing an original image, and filtering the compressed image to obtain the edge intensity value for each pixel point in the image; and

the intercepting the content of the image corresponding to the selected rectangular box to obtain the thumbnail of the image, includes:

corresponding the selected rectangular box to a rectangular box in the original image, and intercepting the content of the image in the rectangular box in the original image to obtain the thumbnail of the original image.

According to a second aspect, an apparatus for generating a thumbnail of an image is provided, including:

a filtering module, configured to filter an image to obtain an edge intensity value for each pixel point in the image;

a calculation unit (502b), configured to:

calculate a spatial position attention value of each pixel point in the image by using the following attention model:

$$P(i,j) = \exp\left(\frac{-(i-X_c)^2 - (j-Y_c)^2}{2*\sigma^2}\right)$$

wherein (i,j) represents any one pixel point in the image; **P(i,j)** represents the spatial position attention value of the pixel point; **(X_c, Y_c)** represents the center point of the image; and σ represents a preset coefficient; and

calculate the distribution value of information amount of each pixel point in the image by using the following distribution model of information amount:

$$I(i,j) = E(i,j) * P(i,j)$$

wherein (i,j) represents any one pixel point in the image; **I(i,j)** represents the distribution value of information amount of the pixel point; **E(i,j)** represents the edge intensity value of the pixel point; and **P(i,j)** represents the spatial position attention value of the pixel point;

a search module, configured to slidingly search on the image by a preset rectangular box, and, for the rectangular box in each slidingly searched position, calculate a distribution value of information amount in the rectangular box according to the edge intensity values of the pixel points therein and, for the rectangular box in each position slidingly searched position, to summarize the distribution values of information amount of all the pixel points in the rectangular box to obtain the distribution value of information amount in the rectangular box; and

an interception module, configured to select the rectangular box with the largest distribution value of information amount, and intercept a content of an image corresponding to the selected rectangular box to obtain a thumbnail of the image.

Wherein, optionally, the calculation unit includes:

a calculation subunit for distribution value of information amount, configured to calculate a weight value corresponding to each pixel point in the rectangular box by using a previously selected kernel function; to multiply the distribution value of information amount of each pixel point in the rectangular box by the corresponding weight value and then summarize the weighted distribution value of information amount, to obtain the distribution value of information amount in the rectangular box;

wherein the closer the pixel is to the center point of the image, the larger the weight value will be taken by the kernel function.

Wherein, optionally, the rectangular box is a square, and a length of a side thereof equals to a short side of the image.

Wherein, optionally, the apparatus further includes:

a compression module, configured to compress an original image; wherein

the filtering module is configured to: filter the compressed image to obtain the edge intensity value for each pixel point in the image; and

the interception module is configured to: correspond the selected rectangular box to a rectangular box in the original image, and intercept the content of the image in the rectangular box in the original image to obtain the thumbnail of the original image.

According to a third aspect, a terminal is provided, which includes a storage and one or more programs stored in the storage, and the terminal is configured to execute the one or more programs by one or more processors, the one or more programs containing instructions to perform the method of the first aspect.

Some advantageous effect brought by the technical solution provided by the present disclosure may include: by filtering the image to obtain the edge intensity value for each pixel point in the image; slidingly searching on the image by a preset rectangular box, and for the rectangular box in each slidingly searched position, calculating the distribution value of information amount in the rectangular box according to the edge intensity values of the pixel points therein; selecting the rectangular box with the largest distribution value of information amount, and intercepting the content of the image corresponding to the selected rectangular box to obtain the thumbnail of the image, the thumbnail may be generated based on the content information of the image, thereby the accuracy of expressing the content information of the original image by the thumbnail may be improved, so as to be more consistent with human cognitive convention.

It should be appreciated that, the above general description and the detailed description below are merely exemplary, and do not limit the disclosure.

BRIEF DESCRIPTION OF THE DRAWINGS

In order to describe the solutions according to the embodiments of the present disclosure more clearly, a brief introduction will be given hereinafter to accompany drawings that need to be used in the description to the embodiments. Obviously, the following accompany drawings are merely some embodiments of the present disclosure, and for those skilled in the art, according to these accompany drawings, other accompany drawings may be obtained without paying any creative labor.

Fig.1 is an exemplary flowchart showing a method for generating a thumbnail of an image according to a first embodiment of the present disclosures;

Fig.2 is an exemplary flowchart showing a method for generating a thumbnail of an image according to a second embodiment of the present disclosures;

Fig.3a is an exemplary flowchart showing a method for generating a thumbnail of an image according to a third embodiment of the present disclosures;

Fig.3b is a schematic view showing a process of generating a thumbnail of an image according to the third embodiment of the present disclosures;

Fig.4a is an exemplary flowchart showing a method for generating a thumbnail of an image according to a fourth embodiment of the present disclosures;

Fig.4b is a schematic view showing a kernel function according to the fourth embodiment of the present disclosures;

Fig.5a is a first exemplary block diagram showing an apparatus for generating a thumbnail of an image according to a fifth embodiment of the present disclosures;

Fig.5b is a second exemplary block diagram showing an apparatus for generating a thumbnail of an image according to the fifth embodiment of the present disclosures; and

Fig.6 is an exemplary block diagram showing a terminal according to a sixth exemplary embodiment.

Explicit embodiments of the present disclosure that have been illustrated in the above accompany drawings will be described in further detail hereinafter. These accompany drawings and literal description are by no means intended to limit the scope of the idea of the present disclosure, but to explain the concept of the present disclosure to those skilled in the art with reference to particular embodiments.

DETAILED DESCRIPTION

In order to make the objects, the technical solutions and advantages more clear, embodiments of the present disclosure will be described in a further detail with reference to the accompany drawings.

A First Embodiment

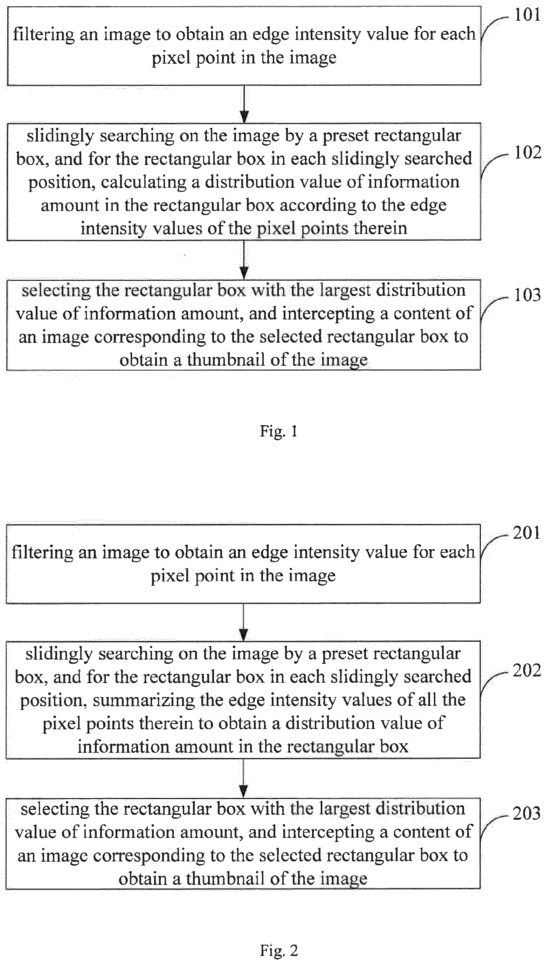

Referring to Fig.1, a method for generating a thumbnail of an image is provided by this embodiment, which includes the following steps.

In step 101, the image is filtered to obtain an edge intensity value for each pixel point in the image.

In this embodiment, filtering the image to obtain the edge intensity value for each pixel point in the image, may include: filtering the image through a Laplace edge filtering operator, a Sobel edge filter operator, a Robert edge operator, a Prewitt edge operator or a LOG (Laplacian of Gaussian) edge operator, to obtain the edge intensity value for each pixel point in the image.

In this embodiment, pixel points with relatively close edge intensity values may be considered as having a small difference in colors, and pixel points with and relatively disparate edge intensity values may be considered as having a large difference in colors. Therefore, the edge intensity value may reflect content information of the image to some extent.

In step 102, a preset rectangular box slidingly searches on the image, and for the rectangular box in each slidingly searched position, a distribution value of information amount in the rectangular box is calculated according to the edge intensity values of the pixel points therein.

Wherein the preset rectangular box may be a rectangular box of any size that is smaller than that of the image. For example, in one case, a short side of the rectangular box equals to a short side of the image, and a long side of the rectangular box is smaller than a long side of the image. In another case, a short side of the rectangular box is smaller than a short side of the image, and a long side of the rectangular box equals to a long side of the image. In yet another case, a short side of the rectangular box is smaller than a short side of the image, and a long side of the rectangular box is smaller than a long side of the image, and so on. This embodiment does not specifically limit thereto.

The rectangular box may slidingly search on the image in any direction, and this embodiment does not specifically limit thereto. For example, the slidingly searching may be only in a transverse direction, or only in a longitudinal direction, or along a direction with a 45° angle, and so on.

In step 103, the rectangular box with the largest distribution value of information amount is selected, and a content of an image corresponding to the selected rectangular box is intercepted/obtained to obtain a thumbnail of the image.

In this embodiment, a size of the generated thumbnail is not restricted. For example, it may be an image of a 1600×1200 size. Wherein the intercepted image may also be compressed first, and the compressed image is taken as the thumbnail. This embodiment does not specifically limit thereto.

In this embodiment, the above calculating, for the rectangular box in each slidingly searched position, of the distribution value of information amount in the rectangular box according to the edge intensity values of the pixel points therein, may include:

for the rectangular box in each slidingly searched position, summarizing the edge intensity values of all the pixel points therein to obtain the distribution value of information amount in the rectangular box.

In this embodiment, the above slidingly searching on the image by the preset rectangular box, and for the rectangular box in each slidingly searched position, calculating the distribution value of information amount in the rectangular box according to the edge intensity values of the pixel points therein, may include:

calculating a spatial position attention value of each pixel point in the image by using an attention model previously created according to coordinates of a center point of the image and of each pixel point; slidingly searching on the image by the preset rectangular box, and for the rectangular box in each slidingly searched position, calculating a distribution value of information amount of each pixel point in the rectangular box by using a distribution model of information amount previously created according to the edge intensity values and the spatial position attention values, and summarizing the distribution values of information amount of all the pixel points in the rectangular box to obtain the distribution value of information amount in the rectangular box.

In this embodiment, the above summarizing the distribution values of information amount of all the pixel points in the rectangular box to obtain the distribution value of information amount in the rectangular box, may include:

calculating a weight value corresponding to each pixel point in the image by using a previously selected kernel function; multiplying the distribution value of information amount of each pixel point in the rectangular box by the corresponding weight value and then summarizing the weighted distribution values of information amount, to obtain the distribution value of information amount in the rectangular box; wherein the closer the pixel is to the center point of the image, the larger the weight value will be taken by the kernel function.

In this embodiment, the above calculating the spatial position attention value of each pixel point in the image by using the attention model previously created according to coordinates of the center point of the image and of each pixel point, may include:

calculating the spatial position attention value of each pixel point in the image by using the following attention model:

$$P(i,j) = \exp\left(\frac{-(i-X_c)^2 - (j-Y_c)^2}{2*\sigma^2}\right)$$

wherein (i,j) represents any one pixel point in the image; P(i,j) represents the spatial position attention value of the pixel point; $(X_c, Y_c)$ represents the center point of the image; and σ represents a preset coefficient.

In this embodiment, the above calculating the distribution value of information amount of each pixel point in the rectangular box by using the distribution model of information amount previously created according to the edge intensity values and spatial position attention values, may include:

calculating a distribution value of information amount of each pixel point in the rectangular box by using the following distribution model of information amount:

$$I(i,j) = E(i,j) * P(i,j)$$

wherein (i,j) represents any one pixel point in the image; **I(i,j)** represents the distribution value of information amount of the pixel point; **E(i,j)** represents the edge intensity value of the pixel point; and **P(i,j)** represents the spatial position attention value of the pixel point.

In this embodiment, the above rectangular box may be a square, a side of which has the same length with a short side of the image, thereby the obtained thumbnail after interception will contain as much content information as possible.

In order to improve operational efficiency, in the above methods, the above images may be compressed before filtered, to obtain images with smaller resolution, and then the successive steps such as the filtering may be performed, and after the rectangular box with the largest distribution value of information amount is selected, the rectangular box is transferred to a corresponding position of the original image to intercept the image. Wherein the filtering the image to obtain the edge intensity value for each pixel point in the image, may include: compressing an original image, and filtering the compressed image to obtain an edge intensity value for each pixel point in the image.

Correspondingly, the intercepting the content of the image corresponding to the selected rectangular box to obtain the thumbnail of the image, includes: corresponding the selected rectangular box to a rectangular box in the original image, and intercepting the content of the image in the rectangular box in the original image to obtain the thumbnail of the original image.

For example, a 1600×1200 image is firstly compressed to a 400×400 image, and a rectangular box is selected on the 400×400 image. After the selection is completed, the area corresponding to the rectangular box is transferred to a corresponding area on the 1600×1200 image. Then the intercepting and compressing may be performed to obtain the thumbnail. Through this method, the processing speed may be highly improved, and time may be saved, so as to satisfy the requirement of real time.

Through the above method provided by this embodiment, by filtering the image to obtain the edge intensity value for each pixel point in the image; slidingly searching on the image by the preset rectangular box, and for the rectangular box in each slidingly searched position, calculating the distribution value of information amount in the rectangular box according to the edge intensity values of the pixel points therein; selecting the rectangular box with the largest distribution value of information amount, and intercepting the content of the image corresponding to the selected rectangular box to obtain the thumbnail of the image, the thumbnail may be generated based on the content information of the image, thereby the accuracy of expressing the content information of the original image by the thumbnail may be improved, so as to be more consistent with human cognitive convention.

A Second Embodiment

Referring to Fig.2, a method for generating a thumbnail of an image is provided by this embodiment, which includes the following steps.

In step 201, the image is filtered to obtain an edge intensity value for each pixel point in the image.

Wherein filtering the image may be realized by using various filter operators, as described in detail in the first embodiment, which will not be repeated herein.

In step 202, a preset rectangular box slidingly searches on the image, and for the rectangular box in each slidingly searched position, the edge intensity values of all the pixel points therein is summarized to obtain a distribution value of information amount in the rectangular box.

Wherein a size of the rectangular box may be set as desired, as long as it is smaller than the size of the image. The slidingly searching on the image by the rectangular box may be a slidingly searching in any direction, and this embodiment does not specifically limit thereto, which may be referred to the description of the first embodiment and will not be repeated herein.

For example, for the rectangular box in each slidingly searched position, the calculation may be performed by using the following equation:

$$I = \sum E(i,j)$$

Wherein (i,j) represents any one pixel point in the image; **E(i,j)** represents the edge intensity value of the pixel point; and I represents the distribution value of information amount in the rectangular box.

Here, the distribution value of information amount of each pixel point in the rectangular box may be considered as equal to the edge intensity value of the point. Therefore, summarizing the edge intensity values of all the pixel points in the rectangular box is just summarizing the distribution values of information amount of all the pixel points in the rectangular box, so the distribution value of information amount in the rectangular box may be obtained thereby.

In step 203, the rectangular box with the largest distribution value of information amount is selected, and a content of an image corresponding to the selected rectangular box is intercepted to obtain a thumbnail of the image.

Through the above method provided by this embodiment, by filtering the image to obtain the edge intensity value for each pixel point in the image; slidingly searching on the image by the preset rectangular box, and for the rectangular box in each slidingly searched position, summarizing the edge intensity values of all the pixel points therein to obtain the distribution value of information amount in the rectangular box; selecting the rectangular box with the largest distribution value of information amount, and intercepting the content of the image corresponding to the selected rectangular box to obtain the thumbnail of the image, the thumbnail may be generated based on the content information of the image since the thumbnail is generated based on edge intensity values, so the thumbnail may contain important and significant content in the image, thereby the accuracy of expressing the content information of the original image by the thumbnail may be improved, so as to be more consistent with human cognitive convention.

A Third Embodiment

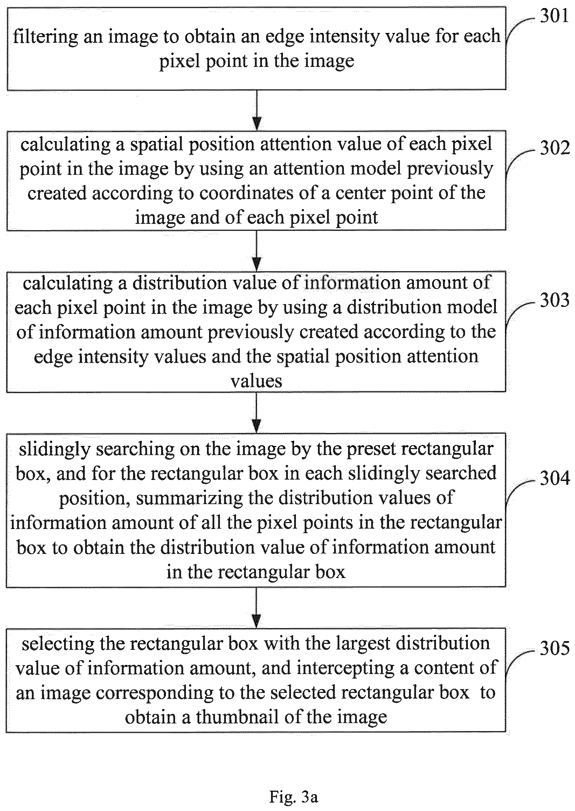

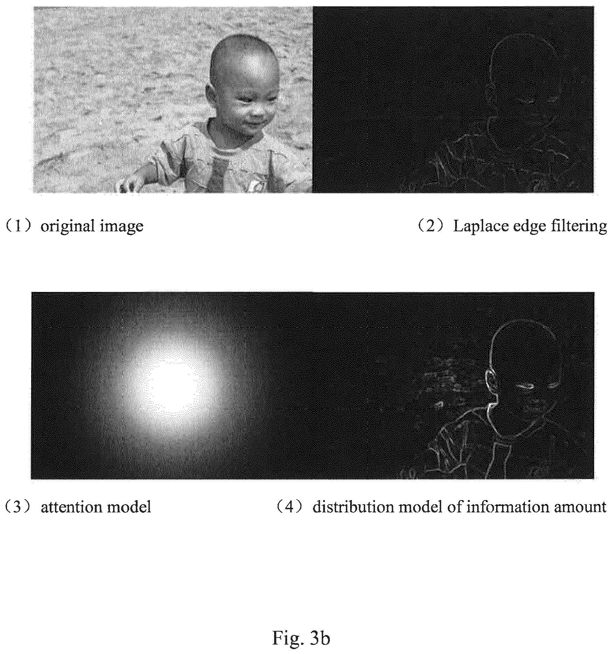

Referring to Fig.3, a method for generating a thumbnail of an image is provided by this embodiment, which includes the following steps.

In step 301, the image is filtered to obtain an edge intensity value for each pixel point in the image.

Wherein filtering the image may be realized by using various filter operators, as described in detail in the first embodiment, which will not be repeated herein.

In addition, in order to facilitate calculation, the edge intensity values may be normalized into values in a range of 0~255 to be calculated afterwards.

In step 302, a spatial position attention value of each pixel point in the image is calculated by using an attention model previously created according to coordinates of a center point of the image and of each pixel point.

Wherein this step may include the following steps:

calculating the spatial position attention value of each pixel point in the image by using the following attention model:

$$P(i,j) = \exp\left(\frac{-(i-X_c)^2 - (j-Y_c)^2}{2*\sigma^2}\right)$$

wherein (i,j) represents any one pixel point in the image; **P(i,j)** represents the spatial position attention value of the pixel point; **(X_c, Y_c)** represents the center point of the image; and $\sigma$ represents a preset coefficient.

In this embodiment, a value of the coefficient $\sigma$ may be preset as desired. For example, it may set as 1/4 of the minimal value of the length and width of the image, etc., and this embodiment does not specifically limit thereto.

In step 303, a distribution value of information amount of each pixel point in the image is calculated by using a distribution model of information amount previously created according to the edge intensity values and spatial position attention values.

Wherein this step may include the following steps:

calculating the distribution value of information amount of each pixel point in the image by using the following distribution model of information amount:

$$I(i,j) = E(i,j) * P(i,j)$$

wherein (i,j) represents any one pixel point in the image; I(i,j) represents the distribution value of information amount of the pixel point; E(i,j) represents the edge intensity value of the pixel point; and **P(i,j)** represents the spatial position attention value of the pixel point.

In step 304, a preset rectangular box slidingly searches on the image, and for the rectangular box in each slidingly searched position, the distribution values of information amount of all the pixel points in the rectangular box is summarized to obtain a distribution value of information amount in the rectangular box.

Wherein a size of the rectangular box may be set as desired, as long as it is smaller than the size of the image. In an embodiment, the rectangular box may be a square, a side of which has the same length with a short side of the image, thereby the obtained thumbnail after interception will contain as much content information as possible. Of course, other embodiments may be adopted, and this embodiment does not specifically limit thereto.

The slidingly searching on the image by the rectangular box may be a slidingly searching in any direction, and this embodiment does not specifically limit thereto, which may be referred to the description of the first embodiment and will not be repeated herein.

In step 305, the rectangular box with the largest distribution value of information amount is selected, and a content of an image corresponding to the selected rectangular box is intercepted to obtain a thumbnail of the image.

Fig.3b is a schematic view showing a process of generating a thumbnail of an image according to this embodiment. Wherein Fig.3b (1) shows an original image, and Fig.3b (2) shows a result of filtering the original image by using a Laplace edge filtering operator, wherein edge intensity values of all the pixel points in the image are normalized into values in a range of 0-255. Fig.3b (3) is a result of calculating a spatial position attention value of each pixel point in the image by using an attention model previously created, wherein the lighter a part is, it means, the more attention a user pays, which means an area that the user is interested in, and the darker a part is, it means, the less attention the user pays. Fig.3b (4) is a result of calculating a distribution value of information amount of each pixel point in the image by using a distribution model of information amount previously created, wherein all the distribution values of information amount are normalized into values in a range of 0-255. It can be seen from the result that, by combining the edge intensity values with the spatial position attention values, pixel points with relatively higher distribution value of information amount all emerges from the image. Therefore, by selecting the rectangular box with the largest distribution value of information amount, a more accurate thumbnail may be generated. Compared with selecting only the central part of the image, the generated thumbnail may reflect the content information of the original image more accurately.

Through the above method provided by this embodiment, by filtering the image to obtain the edge intensity value for each pixel point in the image; calculating the spatial position attention value of each pixel point in the image by using the attention model previously created; slidingly searching on the image by the preset rectangular box, and for the rectangular box in each slidingly searched position, calculating the distribution value of information amount of each pixel point in the rectangular box by using the distribution model of information amount previously created, and summarizing to obtain the distribution value of information amount in the rectangular box; selecting the rectangular box with the largest distribution value of information amount, and intercepting the content of the image corresponding to the selected rectangular box to obtain the thumbnail of the image, the thumbnail may be generated based on the edge intensity values and spatial position attention value, so the thumbnail may not only contain important and significant content in the image, but also concern the positions of the content information of the image, thereby the accuracy of expressing the content information of the original image by the thumbnail may be improved extremely, so as to be more consistent with human cognitive convention. In addition, the above algorithm also ensures the method may be performed in real time to generate a thumbnail more efficiently. Generally, for a 1600×1200 image, a thumbnail may be generated in approximately 40~50ms, and for a 100×100 image, a thumbnail may be generated in approximately about 10ms, which satisfies the requirement of real time for mobile devices, etc.

A Fourth Embodiment

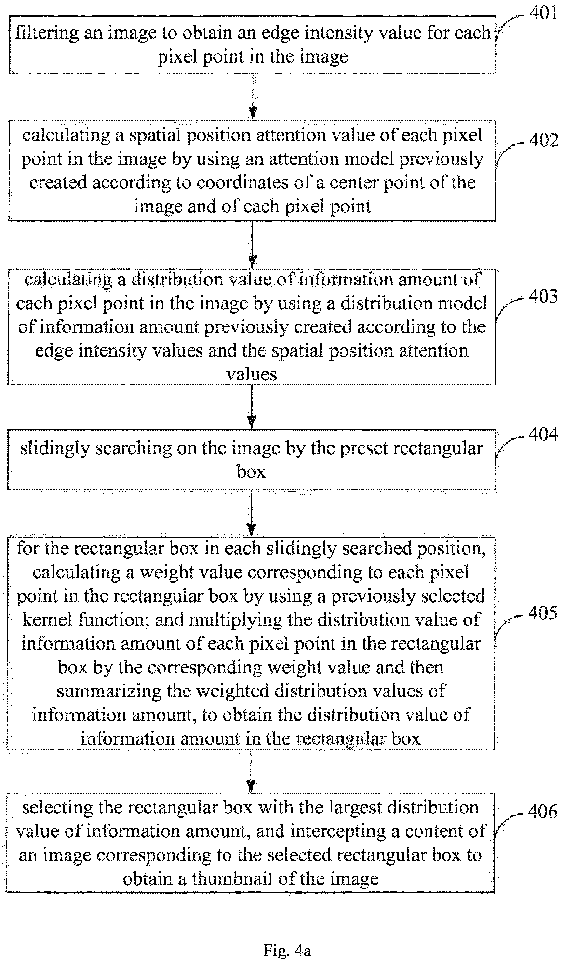

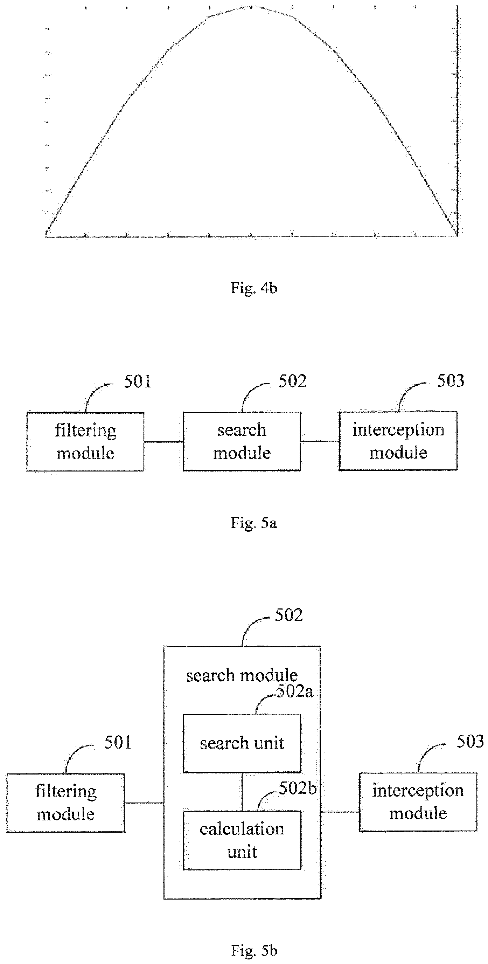

Referring to Fig.4, a method for generating a thumbnail of an image is provided by this embodiment, which includes the following steps.

In step 401, the image is filtered to obtain an edge intensity value for each pixel point in the image.

Wherein filtering the image may be realized by using various filter operators, as described in detail in the first embodiment, which will be not repeated herein.

In step 402, a spatial position attention value of each pixel point in the image is calculated by using an attention model previously created according to coordinates of a center point of the image and of each pixel point.

Wherein the attention model may be referred to the description in the third embodiment, which will not be repeated herein.

In step 403, a distribution value of information amount of each pixel point in the image is calculated by using a distribution model of information amount previously created according to the edge intensity values and the spatial position attention values.

Wherein the distribution model of information amount may be referred to the description in the third embodiment, which will not be repeated herein.

In step 404, the image is slidingly searched by a preset rectangular box.

Wherein a size of the rectangular box may be set as desired, as long as it is smaller than the size of the image. In an embodiment, the rectangular box may be a square, a side of which has the same length with a short side of the image, thereby the obtained thumbnail after interception will contain as much content information as possible. Of course, other embodiments may be adopted, and this embodiment does not specifically limit thereto.

The slidingly searching on the image by the rectangular box may be a slidingly searching in any direction, and this embodiment does not specifically limit thereto, which may be referred to the description of the first embodiment and will not be repeated herein.

In step 405, for the rectangular box in each slidingly searched position, a weight value corresponding to each pixel point in the rectangular box is calculated by using a previously selected kernel function; the distribution value of information amount of each pixel point in the rectangular box is multiplied by the corresponding weight value and the weighted distribution values of information amount is summarized, to obtain the distribution value of information amount in the rectangular box.

Wherein the closer the pixel is to the center point of the image, the larger the weight value will be taken by the kernel function. Conversely, the further the pixel is apart from the center point of the image, the smaller the weight value will be taken by the kernel function.

In this embodiment, the kernel function may be realized through various manners, generally, one of which is a function form with convex in the middle part and low at both ends. Wherein the kernel function may be set such that the maximum weight is 2~3 times the minimum weight and the minimum weight is not equal to 0, etc. Of course, other manners may also be adopted. For example, the kernel function may be a sine function, or a function form with two straight lines, the first of which raises up and the second of which falls down, and this embodiment does not limit thereto.

Fig.4b is a schematic view showing a kernel function according to this embodiment. Taking the rectangular box being a square for example, assuming a length of a side of the square equals to a length of a short side of the original image; a transverse side of the original image is a long side; a longitudinal side of the original image is a short side; during the slidingly searching, the rectangular box slidingly searches in the horizontal direction, not in the vertical direction; the horizontal coordinate of the kernel function in the drawing represents the horizontal coordinate of each pixel point in the image, and the longitudinal coordinate of the kernel function represents the weight value taken for each pixel point. It can be seen from the drawing that, relatively large weight values are taken for the pixel points near the center of the image by the kernel function, and relatively small weight values are taken for the pixel points on the two sides of the image, according to which the distribution value of information amount in the rectangular box is calculated for the interception, thereby it is ensured that the most significant area with the most information amount of the image will be placed in the center of the thumbnail as possible as it may be.

In step 406, the rectangular box with the largest distribution value of information amount is selected, and a content of an image corresponding to the selected rectangular box is intercepted to obtain a thumbnail of the image.

Through the above method provided by this embodiment, by filtering the image to obtain the edge intensity value for each pixel point in the image; calculating the spatial position attention value of each pixel point in the image by using the attention model; slidingly searching on the image by the preset rectangular box, and for the rectangular box in each slidingly searched position, calculating the distribution value of information amount of each pixel point in the rectangular box by using the distribution model of information amount; calculating the weight value corresponding to each pixel point in the image by using the kernel function; multiplying the distribution value of information amount of each pixel point in the rectangular box by the corresponding weight value and then summarizing the weighted distribution values of information amount to obtain the distribution value of information amount in the rectangular box; selecting the rectangular box with the largest distribution value of information amount, and intercepting the content of the image corresponding to the selected rectangular box to obtain the thumbnail of the image, the thumbnail may be generated based on the edge intensity values and spatial position attention value, so the thumbnail may not only contain important and significant content in the image, but also concern the positions of the content information of the image, thereby the accuracy of expressing the content information of the original image by the thumbnail may be improved extremely, so as to be more consistent with human cognitive convention. Further, in calculating the distribution value of information amount in the rectangular box, it is calculated in combination with the corresponding weight of each pixel point calculated through the kernel function. Since the closer the pixel is to the center point of the image, the larger the weight value will be taken by the kernel function, the calculated distribution value of information amount in the rectangular box is more consistent with the characteristic that the user will pay more attention to the center of the image, and the most significant area with the most information amount of the image may be placed in the center of the thumbnail as possible as it may be, thereby the thumbnail may mostly reflect the significant part of the image, so as to satisfy the demands of the user. In addition, the above algorithm also ensures the method may be performed in real time, and may generate a thumbnail more efficiently, so as to satisfy the requirement of real time for mobile devices.

A Fifth Embodiment

Referring to Fig.5a, an apparatus for generating a thumbnail of an image is provided by this embodiment, which includes:

a filtering module 501, configured to filter an image to obtain an edge intensity value for each pixel point in the image;

a search module 502, configured to slidingly search on the image by a preset rectangular box, and calculate a distribution value of information amount in the rectangular box according to the edge intensity values of the pixel points therein for the rectangular box in each slidingly searched position; and

an interception module 503, configured to select the rectangular box with the largest distribution value of information amount, and intercept a content of an image corresponding to the selected rectangular box to obtain a thumbnail of the image.

Wherein the search module 502 may include:

a search unit, configured to slidingly search on the image by the preset rectangular box; and

a calculation unit, configured to, for the rectangular box in each slidingly searched position, summarize the edge intensity values of all the pixel points therein to obtain the distribution value of information amount in the rectangular box.

Or, referring to Fig.5b, the search module 502 may include:

a search unit 502a, configured to slidingly search on the image by the preset rectangular box; and

a calculation unit 502b, configured to calculate a spatial position attention value of each pixel point in the image by using an attention model previously created according to coordinates of a center point of the image and of each pixel point; to calculate a distribution value of information amount of each pixel point in the image by using a distribution model of information amount previously created according to the edge intensity values and the spatial position attention values; and to summarize the distribution values of information amount of all the pixel points in the rectangular box to obtain the distribution value of information amount in the rectangular box, for the rectangular box in each position slidingly searched by the search unit 502a.

Wherein the above calculation unit 502b may include:

a calculation subunit for distribution value of information amount, configured to calculate a weight value corresponding to each pixel point in the rectangular box by using a previously selected kernel function; and to multiply the distribution value of information amount of each pixel point in the rectangular box by the corresponding weight value and then summarize the weighted distribution values of information amount, to obtain the distribution value of information amount in the rectangular box; wherein the closer the pixel is to the center point of the image, the larger the weight value will be taken by the kernel function.

Wherein the above calculation unit 502b may include:

a calculation subunit for spatial position attention value, configured to calculate the spatial position attention value of each pixel point in the image by using the following attention model:

$$P(i,j) = \exp\left(\frac{-(i-X_c)^2 - (j-Y_c)^2}{2*\sigma^2}\right)$$

wherein (i,j) represents any one pixel point in the image; P(i,j) represents the spatial position attention value of the pixel point; $(X_c, Y_c)$ represents the center point of the image; and $\sigma$ represents a preset coefficient.

Wherein the above calculation unit 502b may include:

a calculation subunit for distribution value of information amount, configured to calculate the distribution value of information amount of each pixel point in the image by using the following distribution model of information amount:

$$I(i,j) = E(i,j) * P(i,j)$$

wherein (i,j) represents any one pixel point in the image; **I(i,j)** represents the distribution value of information amount of the pixel point; **E(i,j)** represents the edge intensity value of the pixel point; and **P(i,j)** represents the spatial position attention value of the pixel point.

In this embodiment, the above rectangular box may be a square, and a length of a side thereof equals to a short side of the image.
In this embodiment, the above apparatus may further include:

a compression module, configured to compress an original image; wherein

the filtering module is configured to: filter the compressed image to obtain the edge intensity value for each pixel point in the image; and

the interception module is configured to: correspond the selected rectangular box to a rectangular box in the original image, and intercept the content of the image in the rectangular box in the original image to obtain the thumbnail of the original image.

The above apparatus provided by this embodiment may be applied in a terminal including but not being limited to: a mobile phone and a tablet computer, etc. The above apparatus may perform the method in any one of the above method embodiments, and the detailed description of the process of which may be referred to the description of the method embodiments, which will not be repeated herein.

Through the above apparatus provided by this embodiment, by filtering the image to obtain the edge intensity value for each pixel point in the image; slidingly searching on the image by the preset rectangular box, and for the rectangular box in each slidingly searched position, calculating the distribution value of information amount in the rectangular box according to the edge intensity values of the pixel points therein; selecting the rectangular box with the largest distribution value of information amount, and intercepting the content of the image corresponding to the selected rectangular box to obtain the thumbnail of the image, the thumbnail may be generated based on the content information of the image, thereby the accuracy of expressing the content information of the original image by the thumbnail may be improved, so as to be more consistent with human cognitive convention.

A Sixth Embodiment

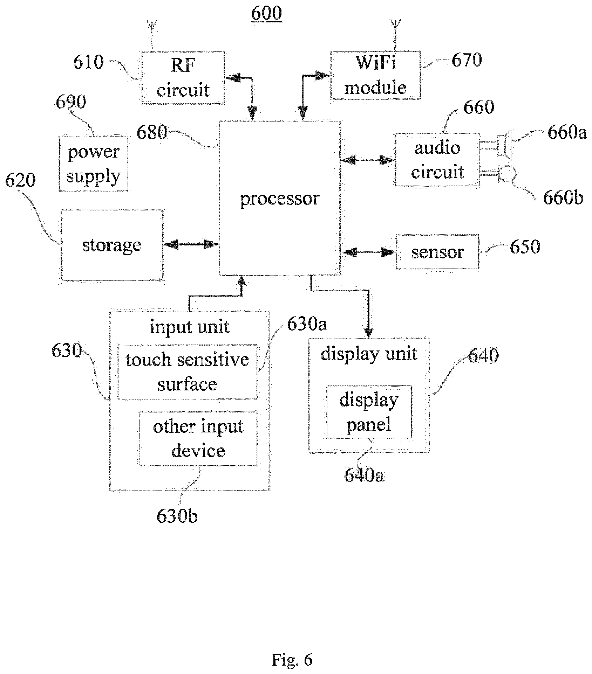

Referring to Fig.6, a terminal 600 is provided by an embodiment, which includes a communication unit 610, a storage 620 including one or more nonvolatile storage media, an input unit 630, a display unit 640, a sensor 650, an audio circuit 660, a WiFi (wireless fidelity) module 670, a processor 680 including one or more processing cores, and a power supply 690, etc.

It should be appreciated by those skilled in the art that, the structure of the terminal shown in Fig.6 does not constitute a limitation to the terminal, and it may include more or less components than what is illustrated, or combine some of the components, or have different component arrangements. Wherein:

The communication unit 610 may be configured to transmit and receive information, or to transmit and receive signal during a procedure of calling. The communication unit 610 may be a network communication device such as a RF (Radio Frequency) circuit, a router and a modem, etc. In particular, when the communication unit 610 is a RF circuit, the communication unit 610 receives downlink information from a base station, and then transfers the information to one or more processors 680 to be processed. Also, the communication unit 610 transmits uplink data to the base station. Generally, the RF circuit as a communication unit includes but is not limited to an antenna, at least one amplifier, a tuner, one or more oscillators, a subscriber identity module (SIM) card, a transceiver, a coupler, an LNA (Low Noise Amplifier) and a duplexer, etc. Furthermore, the communication unit 610 may communicate with a network and other devices through wireless communication. The wireless communication may use any communication standards or protocols including but not being limited to GSM (Global System of Mobile communication), GPRS (General Packet Radio Service), CDMA (Code Division Multiple Access), WCDMA (Wideband Code Division Multiple Access), LTE (Long Term Evolution), e-mail and SMS (Short Messaging Service), etc. The storage 620 may be configured to store software programs and modules. The processor 680 performs various functional applications and data processing by running the software programs and modules stored in the storage 620. The storage 620 may mainly include a program storage area and a data storage area, wherein the program storage area may store operating systems and application programs required by at least one function (such as a function of sound playback and a function of image playback, etc.), etc.; and the data storage area may store data created during operation of the terminal 600 (such as audio data and phone book, etc.), etc. In addition, the storage 620 may include a high-speed random access memory and may also include a non-volatile memory. For example, the storage 620 may include at least one disk storage device, a flash memory device or other volatile solid-state memory devices. Accordingly, the storage 620 may also include a storage controller to provide access to the storage 620 performed by the processor 680 and the input unit 630.

The input unit 630 may be configured to receive input numbers or characters, and generate keyboard, mouse, joystick, optical or trackball input signals related to a user setting and the functional control. Optionally, the input unit 630 may include a touch sensitive surface 630a and other input device 630b. The touch sensitive surface 630a, also known as a touch screen or a track pad, may collect user's touch operations on or near the touch sensitive surface 630a (such as an operation performed by users using any suitable object or accessory such as a finger, a touch pen and the like on or near the touch sensitive surface 630a), and drive a corresponding connected device according to a preset program. Optionally, the touch sensitive surface 630a may include two parts of a touch detection device and a touch controller. Here, the touch detection device detects a touching position of the user, detects a signal caused by the touch operation, and transmits the signal to the touch controller. The touch controller receives touch information from the touch detection device, transforms it into coordinates of the touch point, and sends the coordinates to the processor 680. The touch controller may also receive a command from the processor 680 and execute the command. In addition, the touch sensitive surface 630a may be realized in various types, such as resistive type, capacitive type, infrared type and surface acoustic wave type, etc. In addition to the touch sensitive surface 630a, the input unit 630 may also include other input device 630b. Optionally, the other input device 630b may include but not limited to one or more of a physical keyboard, functional keys (such as volume control keys, switch buttons, etc.), a trackball, a mouse and a joystick, etc.

The display unit 640 may be configured to display information input by the user or information provided for the user and various graphical user interfaces of the terminal 600. These graphical user interfaces may consist of graphics, texts, icons, videos and any combination thereof. The display unit 640 may include a display panel 640a, and optionally, the display panel 640a may be configured with LCD (Liquid Crystal Display) and OLED (Organic Light-Emitting Diode), etc. Further, the touch sensitive surface 630a may cover the display panel 640a. When a touch operation on or near the touch sensitive surface 630a is detected by the touch sensitive surface 630a, the touch operation is sent to the processor 680 to determine the type of touch event, and corresponding visual output will be provided on the display panel 640a by the processor 680 according to the type of touch event. Although in Fig,6, the touch sensitive surface 630a and the display panel 640a are two separate components to realize input and output functions, in some embodiments, the touch sensitive surface 630a and the display panel 640a may be integrated to realize input and output functions.

The terminal 600 may further include at least one kind of sensor 650, such as a light sensor, a motion sensor and other sensors. Optionally, the light sensor may include an ambient light sensor and a proximity sensor. Here, the ambient light sensor may adjust the brightness of the display panel 640a according to the brightness of the ambient light. The proximity sensor may turn off the display panel 640a and/or backlight when the terminal 600 moves close to ear. As one kind of the motion sensor, a gravity acceleration sensor may detect the acceleration in each direction (typically on three axes), and may detect the magnitude and the direction of gravity when it is stationary, which may be used in applications for recognizing the poses of the mobile phone (such as horizontal and vertical screen switching, related games, pose calibration of a magnetometer), functions related to vibration recognizing (such as a pedometer or clicking), etc. The terminal 600 may also be equipped with other sensors such as a gyroscope, a barometer, a hygrometer, a thermometer and an infrared sensor, etc., which will not be redundantly described herein.

The audio circuit 660, a speaker 660a and a microphone 660b may provide an audio interface between the user and the terminal 600. The audio circuit 660 may transform received audio data into electrical signals which are transmitted to the speaker 660a and transformed into sound signals to be output by the speaker 660a. On the other hand, the microphone 660b transforms collected sound signals into electrical signals which are received and transformed into audio data by the audio circuit 660. After being output to the processor 680 to be processed, the audio data is transmitted to, for example, another terminal via the RF circuit 610, or output to the storage 620 for further processing. The audio circuit 660 may also include an ear bud jack to allow a communication between an external earphone and the terminal 600.

In order to achieve wireless communication, the terminal may be equipped with a wireless communication unit 670 which may be a WiFi module. WiFi is a short-range wireless transmission technology. The terminal 600 allows the user to send and receive emails, browse webpages and access streaming media, etc., through the wireless communication unit 670, which provides the user with a wireless broadband Internet access. Although Fig.6 shows the wireless communication unit 670, it should be appreciated that, the wireless communication unit 670 is not a necessary component of the terminal 600, and may be omitted as desired without changing the essential scope of the disclosure.

The processor 680 is a control center of the terminal 600 that connects various parts of the entire mobile phone through various interfaces and circuits, performs various functions and data processing of the terminal 600 by running or executing the software programs and/or modules stored in the storage 620 and by invoking data stored in the storage 620, so as to monitor the overall mobile phone. Optionally, the processor 680 may include one or more processing cores. In an embodiment, the processor 680 may be integrated with an application processor that mainly processes operating systems, user interfaces and application programs, and a modem processor that mainly processes the wireless communication. It should be appreciated that, the above modem processor may not be integrated into the processor 680.

The terminal 600 may also include a power supply 690 (such as a battery) to supply power to each component. In an embodiment, the power supply may be logically connected to the processor 680 through a power supply management system, so as to achieve the functions such as charge, discharge and power consumption managements, etc., through the power supply management system. The power supply 690 may also include one or more components of a DC or AC power, a recharge system, a power failure detection circuit, a power converter or an inverter and a power status indicator, etc.

Although not shown, the terminal 600 may also include a camera and a Bluetooth module, etc., which is not described repeatedly.

An optional structure of the terminal 600 described above in conjunction with Fig.6, in which one or more modules are stored in the storage and configured to be executed by one or more processors. The one or more modules have the following functions:

filtering an image to obtain an edge intensity value for each pixel point in the image;

slidingly searching on the image by a preset rectangular box, and calculating a distribution value of information amount in the rectangular box according to the edge intensity values of the pixel points therein for the rectangular box in each slidingly searched position; and

selecting the rectangular box with the largest distribution value of information amount, and intercepting a content of an image corresponding to the selected rectangular box to obtain a thumbnail of the image.

Wherein the calculating the distribution value of information amount in the rectangular box according to the edge intensity values of the pixel points therein for the rectangular box in each slidingly searched position, includes:

for the rectangular box in each slidingly searched position, summarizing the edge intensity values of all the pixel points therein to obtain the distribution value of information amount in the rectangular box.

Wherein the slidingly searching on the image by the preset rectangular box, and calculating the distribution value of information amount in the rectangular box according to the edge intensity values of the pixel points therein for the rectangular box in each slidingly searched position, includes:

calculating a spatial position attention value of each pixel point in the image by using an attention model previously created according to coordinates of a center point of the image and of each pixel point;

calculating a distribution value of information amount of each pixel point in the image by using a distribution model of information amount previously created according to the edge intensity values and the spatial position attention values; and

slidingly searching on the image by the preset rectangular box, and for the rectangular box in each slidingly searched position, summarizing the distribution values of information amount of all the pixel points in the rectangular box to obtain the distribution value of information amount in the rectangular box.

Wherein the summarizing the distribution values of information amount of all the pixel points in the rectangular box to obtain the distribution value of information amount in the rectangular box, includes:

calculating a weight value corresponding to each pixel point in the rectangular box by using a previously selected kernel function; and
multiplying the distribution value of information amount of each pixel point in the rectangular box by the corresponding weight value and then summarizing the weighted distribution values of information amount, to obtain the distribution value of information amount in the rectangular box;
wherein the closer the pixel is to the center point of the image, the larger the weight value will be taken by the kernel function.

Wherein the calculating the spatial position attention value of each pixel point in the image by using the attention model previously created according to coordinates of the center point of the image and of each pixel point, includes:

calculating the spatial position attention value of each pixel point in the image by using the following attention model:

$$P(i,j) = \exp\left(\frac{-(i-X_c)^2 - (j-Y_c)^2}{2*\sigma^2}\right)$$

wherein (i,j) represents any one pixel point in the image; **P(i,j)** represents the spatial position attention value of the pixel point; **(X_c, Y_c)** represents the center point of the image; and $\sigma$ represents a preset coefficient.

Wherein the calculating the distribution value of information amount of each pixel point in the image by using the distribution model of information amount previously created according to the edge intensity values and the spatial position attention values, includes:

calculating the distribution value of information amount of each pixel point in the image by using the following distribution model of information amount:

$$I(i,j) = E(i,j) * P(i,j)$$

wherein (i,j) represents any one pixel point in the image; **I(i,j)** represents the distribution value of information amount of the pixel point; **E(i,j)** represents the edge intensity value of the pixel point; and **P(i,j)** represents the spatial position attention value of the pixel point.

Wherein the rectangular box is a square, and a length of a side thereof equals to a short side of the image.
Wherein the filtering the image to obtain the edge intensity value for each pixel point in the image, includes:

compressing an original image, and filtering the compressed image to obtain the edge intensity value for each pixel point in the image; and

the intercepting the content of the image corresponding to the selected rectangular box to obtain the thumbnail of the image, includes:

corresponding the selected rectangular box to a rectangular box in the original image, and intercepting the content of the image in the rectangular box in the original image to obtain the thumbnail of the original image.

The above terminal provided by this embodiment may perform the method in any one of the above method embodiments, the detailed description of the process of which may be referred to the description of the method embodiments, which will not be repeated herein.

Through the above terminal provided by this embodiment, by filtering the image to obtain the edge intensity value for each pixel point in the image; slidingly searching on the image by the preset rectangular box, and for the rectangular box in each slidingly searched position, calculating the distribution value of information amount in the rectangular box according to the edge intensity values of the pixel points therein; selecting the rectangular box with the largest distribution value of information amount, and intercepting the content of the image corresponding to the selected rectangular box to obtain the thumbnail of the image, the thumbnail may be generated based on the content information of the image, thereby the accuracy of expressing the content information of the original image by the thumbnail may be improved, so as to be more consistent with human cognitive convention.

A Seventh Embodiment

A nonvolatile readable storage media is provided by this embodiment, in which one or more programs are stored. When being applied in a device, the one or more programs may cause the device to perform the instructions including the following steps:

filtering an image to obtain an edge intensity value for each pixel point in the image;

slidingly searching on the image by a preset rectangular box, and calculating a distribution value of information amount in the rectangular box according to the edge intensity values of the pixel points therein for the rectangular box in each slidingly searched position; and

selecting the rectangular box with the largest distribution value of information amount, and intercepting a content of an image corresponding to the selected rectangular box to obtain a thumbnail of the image.

Wherein the calculating the distribution value of information amount in the rectangular box according to the edge intensity values of the pixel points therein for the rectangular box in each slidingly searched position, includes:

summarizing the edge intensity values of all the pixel points therein to obtain the distribution value of information amount in the rectangular box, for the rectangular box in each slidingly searched position.

Wherein the slidingly searching on the image by the preset rectangular box, and calculating the distribution value of information amount in the rectangular box according to the edge intensity values of the pixel points therein for the rectangular box in each slidingly searched position, includes:

calculating a spatial position attention value of each pixel point in the image by using an attention model previously created according to coordinates of a center point of the image and of each pixel point;

calculating the distribution value of information amount of each pixel point in the image by using a distribution model of information amount previously created according to the edge intensity values and the spatial position attention values; and

slidingly searching on the image by the preset rectangular box, and for the rectangular box in each slidingly searched position, summarizing the distribution values of information amount of all the pixel points in the rectangular box to obtain the distribution value of information amount in the rectangular box.

Wherein the summarizing the distribution values of information amount of all the pixel points in the rectangular box to obtain the distribution value of information amount in the rectangular box, includes:

calculating a weight value corresponding to each pixel point in the rectangular box by using a previously selected kernel function; and

multiplying the distribution value of information amount of each pixel point in the rectangular box by the corresponding weight value and then summarizing the weighted distribution values of information amount, to obtain the distribution value of information amount in the rectangular box;

wherein the closer the pixel is to the center point of the image, the larger the weight value will be taken by the kernel function.

Wherein the calculating the spatial position attention value of each pixel point in the image by using the attention model previously created according to coordinates of the center point of the image and of each pixel point, includes:

calculating the spatial position attention value of each pixel point in the image by using the following attention model:

$$P(i,j) = \exp\left(\frac{-(i-X_c)^2 - (j-Y_c)^2}{2*\sigma^2}\right)$$

wherein (i,j) represents any one pixel point in the image; **P(i,j)** represents the spatial position attention value of the pixel point; **(X$_c$, Y$_c$)** represents the center point of the image; and σ represents a preset coefficient.

Wherein the calculating the distribution value of information amount of each pixel point in the image by using the distribution model of information amount previously created according to the edge intensity values and the spatial position attention values, includes:

calculating the distribution value of information amount of each pixel point in the image by using the following distribution model of information amount:

$$I(i,j) = E(i,j) * P(i,j)$$

wherein (i,j) represents any one pixel point in the image; **I(i,j)** represents the distribution value of information amount of the pixel point; **E(i,j)** represents the edge intensity value of the pixel point; and **P(i,j)** represents the spatial position attention value of the pixel point.

Wherein the rectangular box is a square, and a length of a side thereof equals to a short side of the image.

Wherein the filtering the image to obtain the edge intensity value for each pixel point in the image, includes: compressing an original image, and filtering the compressed image to obtain the edge intensity value for each pixel point in the image; and the intercepting the content of the image corresponding to the selected rectangular box to obtain the thumbnail of the image, includes: corresponding the selected rectangular box to a rectangular box in the original image, and intercepting the content of the image in the rectangular box in the original image to obtain the thumbnail of the original image.

Through the above nonvolatile readable storage media provided by this embodiment, by filtering the image to obtain the edge intensity value for each pixel point in the image; slidingly searching on the image by the preset rectangular box, and for the rectangular box in each slidingly searched position, calculating the distribution value of information amount in the rectangular box according to the edge intensity values of the pixel points therein; selecting the rectangular box with the largest distribution value of information amount, and intercepting the content of the image corresponding to the selected rectangular box to obtain the thumbnail of the image, the thumbnail may be generated based on the content information

mation of the image, thereby the accuracy of expressing the content information of the original image by the thumbnail may be improved, so as to be more consistent with human cognitive convention.

It should be understood by those skilled in the art that all or part of the steps of the above embodiments may be implemented through hardware, or through a program instructing a related hardware. The program may be stored on a readable storage medium which may be read-only memory, magnetic or optical disks, etc.

The foregoing are only preferred embodiments of the disclosure, and are not intended to limit the disclosure.

**Claims**

1.  A method for generating a thumbnail of an image, wherein the method comprises:

    filtering (301, 401) an image to obtain an edge intensity value for each pixel point in the image; calculating (302, 402) a spatial position attention value of each pixel point in the image by using the following attention model:

    $$P(i,j) = \exp\left(\frac{-(i-X_c)^2 - (j-Y_c)^2}{2*\sigma^2}\right)$$

    wherein (i,j) represents any one pixel point in the image; **P(i,j)** represents the spatial position attention value of the pixel point; **(X$_c$,Y$_c$)** represents the center point of the image; and σ represents a preset coefficient calculating a distribution value of information amount of each pixel point in the image by using the following distribution model of information amount:

    $$I(i,j) = E(i,j) * P(i,j)$$

    wherein (i,j) represents any one pixel point in the image; **I(i,j)** represents the distribution value of information amount of the pixel point; **E(i,j)** represents the edge intensity value of the pixel point; and **P(i,j)** represents the spatial position attention value of the pixel point 404, 405) slidingly searching (304, 404, 405) on the image by a rectangular box of a size smaller than the image, and for the rectangular box in each slidingly searched position, calculating a distribution value of information amount in the rectangular box according to the edge intensity values of the pixel points therein, by summarizing the distribution values of information amount of all the pixel points in the rectangular box to obtain the distribution value of information amount in the rectangular box

selecting (305, 406) the rectangular box with the largest distribution value of information amount, and intercepting content of an image corresponding to the selected rectangular box to obtain a thumbnail of the image.

2. The method according to claim 1, **characterized in that**, the summarizing the distribution values of information amount of all the pixel points in the rectangular box to obtain the distribution value of information amount in the rectangular box, comprises:

calculating a weight value corresponding to each pixel point in the rectangular box by using a kernel function; and

multiplying the distribution value of information amount of each pixel point in the rectangular box by the corresponding weight value and then summarizing the weighted distribution values of information amount, to obtain the distribution value of information amount in the rectangular box;

wherein the closer the pixel is to the center point of the image, the larger the weight value will be taken by the kernel function.

3. The method according to any one of claims 1 or 2, **characterized in that**, the filtering the image to obtain the edge intensity value for each pixel point in the image, comprises: compressing an original image, and filtering the compressed image to obtain the edge intensity value for each pixel point in the image; and

the intercepting the content of the image corresponding to the selected rectangular box to obtain the thumbnail of the image, comprises: corresponding the selected rectangular box to a rectangular box in the original image, and intercepting the content of the image in the rectangular box in the original image to obtain the thumbnail of the original image.

4. An apparatus for generating a thumbnail of an image, the apparatus comprising:

a filtering module (501), configured to filter an image to obtain an edge intensity value for each pixel point in the image;
a calculation unit (502b), configured to:

calculate a spatial position attention value of each pixel point in the image by using the following attention model:

$$P(i,j) = \exp\left(\frac{-(i-X_c)^2 - (j-Y_c)^2}{2*\sigma^2}\right)$$

wherein (i,j) represents any one pixel point in the image; **P(i,j)** represents the spatial position attention value of the pixel point; **(X_c, Y_c)** represents the center point of the image; and σ represents a preset coefficient; and

calculate a distribution value of information amount of each pixel point in the image by using the following distribution model of information amount:

$$I(i,j) = E(i,j) * P(i,j)$$

wherein (i,j) represents any one pixel point in the image; **I(1,j)** represents the distribution value of information amount of the pixel point; **E(i,j)** represents the edge intensity value of the pixel point; and **P(i,j)** represents the spatial position attention value of the pixel point;

a search module (502), configured to slidingly search on the image by a rectangular box of a size smaller than the image, and for the rectangular box in each slidingly searched position, calculate a distribution value of information amount in the rectangular box according to the edge intensity values of the pixel points therein, by summarizing the distribution values of information amount of all the pixel points in the rectangular box to obtain the distribution value of information amount in the rectangular box; and
an interception module (503), configured to select the rectangular box with the largest distribution value of information amount, and intercept content of an image corresponding to the selected rectangular box to obtain a thumbnail of the image.

5. The apparatus according to claim 4, **characterized in that**, the calculation unit comprises:

a calculation subunit for distribution value of information amount, configured to calculate a weight value corresponding to each pixel point in the rectangular box by using a kernel function; and to multiply the distribution value of information amount of each pixel point in the rectangular box by the corresponding weight value and then summarize the weighted distribution values of information amount, to obtain the distribution value of information amount in the rectangular box;

wherein the closer the pixel is to the center point of the image, the larger the weight value will be taken by the kernel function.

6. A terminal that comprises a storage and one or more programs stored in the storage, wherein the terminal is configured to execute the one or more programs by one or more processors, the one or more programs containing instructions to perform the method of any of claims 1 to 3.

7. A computer program containing instructions that, when executed by one or more processors of a terminal, causes the terminal to perform the method of claim 1.

**Patentansprüche**

1. Verfahren zum Erzeugen einer Miniaturansicht eines Bildes, wobei das Verfahren Folgendes beinhaltet:

Filtern (301, 401) eines Bildes, um einen Randintensitätswert für jeden Pixelpunkt in dem Bild zu erhalten;
Berechnen (302, 402) eines räumlichen Positionsbeachtungswerts jedes Pixelpunkts in dem Bild anhand des folgenden Beachtungsmodells:

$$P(i,j) = \exp\left(\frac{-(i-X_c)^2-(j-Y_c)^2}{2*\sigma^2}\right)$$

wobei (i,j) einen beliebigen Pixelpunkt in dem Bild repräsentiert; **P(i,j)** den räumlichen Positionsbeachtungswert des Pixelpunkts repräsentiert; **(X_c,Y_c)** den Mittelpunkt des Bildes repräsentiert; und $\sigma$ einen voreingestellten Koeffizienten repräsentiert;
Berechnen eines Verteilungswerts der Informationsmenge jedes Pixelpunkts in dem Bild anhand des folgenden Verteilungsmodells von Informationsmenge:

$$I(i,j) = E(i,j) * P(i,j)$$

wobei (i,j) einen beliebigen Pixelpunkt in dem Bild repräsentiert; **I(i,j)** den Verteilungswert von Informationsmenge des Pixelpunkts repräsentiert; **E(i,j)** den Randintensitätswert des Pixelpunkts repräsentiert; und **P(i,j)** den räumlichen Positionbeachtungswert des Pixelpunkts repräsentiert,
gleitendes Suchen (304, 404, 405) auf dem Bild durch eine rechteckige Box, die kleiner ist als das Bild, und für die rechteckige Box in jeder gleitend gesuchten Position Berechnen (304, 405) eines Verteilungswerts von Informationsmenge in der rechteckigen Box gemäß den Randintensitätswerten der Pixelpunkte darin, durch Zusammenfassen der Verteilungswerte von Informationsmenge aller Pixelpunkte in der rechteckigen Box, um den Verteilungswert von Informationsmenge in der rechteckigen Box zu erhalten,
Auswählen (305, 406) der rechteckigen Box mit dem größten Verteilungswert von Informationsmenge, und Abfangen von Inhalt eines Bildes entsprechend der gewählten rechteckigen Box, um eine Miniaturansicht des Bildes zu erhalten.

2. Verfahren nach Anspruch 1, **dadurch gekennzeichnet, dass** das Zusammenfassen der Verteilungswerte von Informationsmenge aller Pixelpunkte in der rechteckigen Box zum Erhalten des Verteilungswerts von Informationsmenge in der rechteckigen Box Folgendes beinhaltet:

Berechnen eines Gewichtungswerts entsprechend jedem Pixelpunkt in der rechteckigen Box mittels einer Kernel-Funktion; und
Multiplizieren des Verteilungswerts von Informationsmenge jedes Pixelpunkts in der rechteckigen Box mit dem entsprechenden Gewichtungswert und dann Zusammenfassen der gewichteten Verteilungswerte von Informationsmenge, um den Verteilungswert von Informationsmenge in der rechteckigen Box zu erhalten;
wobei die Kernel-Funktion den Gewichtungswert umso größer nimmt, je näher sich das Pixel am Mittelpunkt des Bildes befindet.

3. Verfahren nach Anspruch 1 oder 2, **dadurch gekennzeichnet, dass** das Filtern des Bildes zum Erhalten des Randintensitätswertes für jeden Pixelpunkt in dem Bild Folgendes beinhaltet: Komprimieren eines Ursprungsbildes und Filtern des komprimierten Bildes, um den Randintensitätswert für jeden Pixelpunkt in dem Bild zu erhalten; und
das Abfangen des Inhalts des Bildes entsprechend der gewählten rechteckigen Box zum Erhalten der Miniaturansicht des Bildes Folgendes beinhaltet: In-Übereinstimmung-Bringen der gewählten rechteckigen Box mit einer rechteckigen Box im Ursprungsbild und Abfangen des Inhalts des Bildes in der rechteckigen Box in dem Ursprungsbild, um die Miniaturansicht des Ursprungsbildes zu erhalten.

4. Vorrichtung zum Erzeugen einer Miniaturansicht eines Bildes, wobei die Vorrichtung Folgendes umfasst:

ein Filtermodul (501), konfiguriert zum Filtern eines Bildes, um einen Randintensitätswert für jeden Pixelpunkt in dem Bild zu erhalten; eine Recheneinheit (502b), konfiguriert zum:

Berechnen eines räumlichen Positionsbeachtungswerts jedes Pixelpunkts in dem Bild anhand des folgenden Beachtungsmodells:

$$P(i,j) = \exp\left(\frac{-(i-X_c)^2 - (j-Y_c)^2}{2*\sigma^2}\right)$$

wobei (i,j) einen beliebigen Pixelpunkt in dem Bild repräsentiert; **P(i,j)** den räumlichen Positionsbeachtungswert des Pixelpunkts repräsentiert; **(X_c,Y_c)** den Mittelpunkt des Bildes repräsentiert; und σ einen voreingestellten Koeffizienten repräsentiert;
Berechnen eines Verteilungswerts von Informationsmenge jedes Pixelpunkts in dem Bild anhand des folgenden Verteilungsmodells von Informationsmenge:

$$I(i,j) = E(i,j) * P(i,j)$$

wobei (i,j) einen beliebigen Pixelpunkt in dem Bild repräsentiert; **I(i,j)** den Verteilungswert von Informationsmenge des Pixelpunkts repräsentiert; **E(i,j)** den Randintensitätswert des Pixelpunkts repräsentiert; und **P(i,j)** den räumlichen Positionsbeachtungswert des Pixelpunkts repräsentiert;

ein Suchmodul (502), konfiguriert zum gleitenden Suchen auf dem Bild mit einer rechteckigen Box, die kleiner ist als das Bild, und für die rechteckige Box in jeder gleitend gesuchten Position Berechnen eines Verteilungswerts von Informationsmenge in der rechteckigen Box gemäß den Randintensitätswerten der Pixelpunkte darin, durch Zusammenfassen der Verteilungswerte von Informationsmenge aller Pixelpunkte in der rechteckigen Box, um den Verteilungswert von Informationsmenge in der rechteckigen Box zu erhalten; und
ein Abfangmodul (503), konfiguriert zum Auswählen der rechteckigen Box mit dem größten Verteilungswert von Informationsmenge, und Abfangen von Inhalt eines Bildes entsprechend der gewählten rechteckigen Box, um eine Miniaturansicht des Bildes zu erhalten.

**5.** Vorrichtung nach Anspruch 4, **dadurch gekennzeichnet, dass** die Recheneinheit Folgendes umfasst:

eine Rechensubeinheit für Verteilungwert von Informationsmenge, konfiguriert zum Berechnen eines Gewichtungswertes entsprechend jedem Pixelpunkt in der rechteckigen Box anhand einer Kernel-Funktion; und zum Multiplizieren des Verteilungswerts von Informationsmenge jedes Pixelpunkts in der rechteckigen Box mit dem entsprechenden Gewichtungswert, und dann Zusammenfassen der gewichteten Verteilungswerte von Informationsmenge, um den Verteilungswert von Informationsmenge in der rechteckigen Box zu erhalten;
wobei die Kernelfunktion den Gewichtungswert umso größer nimmt, je näher sich das Pixel am Mittelpunkt des Bildes befindet.

**6.** Endgerät, das einen Speicher sowie ein oder mehrere in dem Speicher gespeicherte Programme umfasst, wobei das Endgerät zum Ausführen der ein oder mehreren Programme durch ein oder mehrere Prozessoren konfiguriert ist, wobei die ein oder mehreren Programme Befehle zum Ausführen des Verfahrens nach einem der Ansprüche 1 bis 3 enthalten.

**7.** Computerprogramm, das Befehle enthält, die bei Ausführung durch ein oder mehrere Prozessoren eines Endgeräts bewirken, dass das Endgerät das Verfahren nach Anspruch 1 ausführt.

## Revendications

**1.** Procédé de génération d'une vignette d'une image, le procédé comprenant :

le filtrage (301, 401) d'une image pour obtenir une valeur d'intensité de bord de chaque point de pixel dans l'image ;
le calcul (302, 402) d'une valeur d'attention de position spatiale de chaque point de pixel dans l'image en utilisant le modèle d'attention suivant :

$$P(i,j) = \exp\left(\frac{-(i-X_c)^2 - (j-Y_c)^2}{2*\sigma^2}\right)$$

où (i,j) représente n'importe quel point de pixel dans l'image ; P(i,j) représente la valeur d'attention de position spatiale du point de pixel ; $(X_c, Y_c)$ représente le point central de l'image ; et σ représente un coefficient prédéfini
le calcul d'une valeur de distribution de quantité d'informations de chaque point de pixel dans l'image en utilisant le modèle de distribution de quantité d'informations suivant :

$$I(i,j) = E(i,j) * P(i,j)$$

où (i,j) représente n'importe quel point de pixel dans l'image ; I(i,j) représente la valeur de distribution de quantité d'information du point de pixel ; E(i,j) représente la valeur d'intensité de bord du point du pixel ; et P(i,j) représente la valeur d'attention de position spatiale du point de pixel

la recherche par glissement (304, 404, 405) sur l'image d'une case rectangulaire d'une taille inférieure à l'image, et pour la case rectangulaire à chaque position recherchée par glissement, le calcul (304, 405) d'une valeur de distribution de quantité d'informations dans la case rectangulaire conformément aux valeurs d'intensité de bord des points de pixels à l'intérieur de la case, en résumant les valeurs de distribution de quantité d'informations de tous les points de pixels dans la case rectangulaire pour obtenir la valeur de distribution de quantité d'informations dans la case rectangulaire

la sélection (305, 406) de la case rectangulaire ayant la plus grande valeur de distribution de quantité d'informations, et l'interception du contenu d'une image correspondant à la case rectangulaire sélectionnée pour obtenir une vignette de l'image.

2. Procédé selon la revendication 1, **caractérisé en ce que**, le résumé des valeurs de distribution de quantité d'informations de tous les points de pixels dans la case rectangulaire pour obtenir la valeur de distribution de quantités d'informations dans la case rectangulaire, comprend

le calcul d'une valeur de pondération correspondant à chaque point de pixel dans la case rectangulaire en utilisant une fonction noyau ; et la multiplication de la valeur de distribution de quantité d'informations de chaque point de pixel dans la case rectangulaire par la valeur de pondération correspondante puis le résumé des valeurs de distribution de quantité d'informations pondérées, pour obtenir la valeur de distribution de quantité d'informations dans la case rectangulaire ; dans lequel plus le pixel est près du point central de l'image, plus la valeur de pondération prise par la fonction noyau sera importante.

3. Procédé selon l'une quelconque des revendications 1 ou 2, **caractérisé en ce que** le filtrage de l'image pour obtenir la valeur d'intensité de bord de chaque point de pixel dans l'image, comprend : la compression d'une image d'origine, et le filtrage de l'image compressée pour obtenir la valeur d'intensité de bord de chaque point de pixel dans l'image ; et l'interception du contenu de l'image correspondant à la case rectangulaire sélectionnée pour obtenir la vignette de l'image comprend : la mise en correspondance de la case rectangulaire sélectionnée avec une case rectangulaire dans l'image d'origine, et l'interception du contenu de l'image dans la case rectangulaire dans l'image d'origine pour obtenir la vignette de l'image d'origine.

4. Appareil de génération d'une vignette d'une image, l'appareil comprenant :

un module de filtrage (501), configuré pour filtrer une image pour obtenir une valeur d'intensité de bord de chaque point de pixel dans l'image ; une unité de calcul (502b), configurée pour :

calculer une valeur d'attention de position spatiale de chaque point de pixel dans l'image en utilisant le modèle d'attention suivant :

$$P(i,j) = \exp\left( \frac{-(i-X_c)^2 - (j-Y_c)^2}{2*\sigma^2} \right)$$

où (i,j) représente n'importe quel point de pixel dans l'image ; P(i,j) représente la valeur d'attention de position spatiale du point de pixel ; $(X_c, Y_c)$ représente le point central de l'image ; et $\sigma$ représente un coefficient prédéfini ; et calculer une valeur de distribution de quantité d'informations de chaque point de pixel dans l'image en utilisant le modèle de distribution de quantité d'informations suivant :

$$I(i,j) = E(i,j) * P(i,j)$$

où (i,j) représente n'importe quel point de pixel dans l'image ; I(i,j) représente la valeur de distribution de quantité d'information du point de pixel ; E(i,j) représente la valeur d'intensité de bord du point du pixel ; et P(i,j) représente la valeur d'attention de position spatiale du point de pixel ;

un module de recherche (502), configuré pour rechercher par glissement sur l'image d'une case rectangulaire d'une taille inférieure à l'image, et pour la case rectangulaire à chaque position recherchée par glissement, calculer une valeur de distribution de quantité d'informations dans la case rectangulaire conformément aux valeurs d'intensité de bord des points de pixels à l'intérieur de la case, en résumant les valeurs de distribution de quantité d'informations de tous les points de pixels dans la case rectangulaire pour obtenir la valeur de distribution de quantité d'informations dans la case rectangulaire ; et

un module d'interception (503), configuré pour sélectionner la case rectangulaire ayant la plus grande valeur de distribution de quantité d'informations, et intercepter le contenu d'une image correspondant à la case rectangulaire sélectionnée pour obtenir une vignette de l'image.

5. Appareil selon la revendication 4, **caractérisé en ce que**, l'unité de calcul comprend :

une sous-unité de calcul de valeur de distribution de quantité d'informations, configurée pour calculer une valeur de pondération correspondant à chaque point de pixel dans la case rectangulaire en utilisant une fonction noyau ; et multiplier la valeur de distribution de quantité d'informations de chaque point de pixel dans la case rectangulaire par la valeur de pondération correspondante puis résumer les valeurs de distribution de quantité d'informations pondérées, pour obtenir la valeur de distribution de quantité d'informations dans la case rectangulaire ; dans lequel plus le pixel est près du point central de l'image, plus la valeur de pondération prise par la fonction noyau sera importante.

6. Terminal comprenant une mémoire et plusieurs programmes stockés dans la mémoire, le terminal étant configuré pour exécuter les un ou plusieurs programmes par un ou plusieurs processeurs, les un ou plusieurs programmes contenant des instructions pour exécuter le procédé selon l'une quelconque des revendications 1 à 3.

7. Programme informatique contenant des instructions qui, à leur exécution par un ou plusieurs processeurs d'un terminal, amènent le terminal à exécuter le procédé selon la revendication 1.

filtering an image to obtain an edge intensity value for each pixel point in the image ⌐101

slidingly searching on the image by a preset rectangular box, and for the rectangular box in each slidingly searched position, calculating a distribution value of information amount in the rectangular box according to the edge intensity values of the pixel points therein ⌐102

selecting the rectangular box with the largest distribution value of information amount, and intercepting a content of an image corresponding to the selected rectangular box to obtain a thumbnail of the image ⌐103

Fig. 1

filtering an image to obtain an edge intensity value for each pixel point in the image ⌐201

slidingly searching on the image by a preset rectangular box, and for the rectangular box in each slidingly searched position, summarizing the edge intensity values of all the pixel points therein to obtain a distribution value of information amount in the rectangular box ⌐202

selecting the rectangular box with the largest distribution value of information amount, and intercepting a content of an image corresponding to the selected rectangular box to obtain a thumbnail of the image ⌐203

Fig. 2

filtering an image to obtain an edge intensity value for each pixel point in the image  ⌐ 301

calculating a spatial position attention value of each pixel point in the image by using an attention model previously created according to coordinates of a center point of the image and of each pixel point  ⌐ 302

calculating a distribution value of information amount of each pixel point in the image by using a distribution model of information amount previously created according to the edge intensity values and the spatial position attention values  ⌐ 303

slidingly searching on the image by the preset rectangular box, and for the rectangular box in each slidingly searched position, summarizing the distribution values of information amount of all the pixel points in the rectangular box to obtain the distribution value of information amount in the rectangular box  ⌐ 304

selecting the rectangular box with the largest distribution value of information amount, and intercepting a content of an image corresponding to the selected rectangular box  to obtain a thumbnail of the image  ⌐ 305

Fig. 3a

（1）original image　　　　　　　　　　　（2）Laplace edge filtering

（3）attention model　　　　（4）distribution model of information amount

Fig. 3b

filtering an image to obtain an edge intensity value for each pixel point in the image — 401

calculating a spatial position attention value of each pixel point in the image by using an attention model previously created according to coordinates of a center point of the image and of each pixel point — 402

calculating a distribution value of information amount of each pixel point in the image by using a distribution model of information amount previously created according to the edge intensity values and the spatial position attention values — 403

slidingly searching on the image by the preset rectangular box — 404

for the rectangular box in each slidingly searched position, calculating a weight value corresponding to each pixel point in the rectangular box by using a previously selected kernel function; and multiplying the distribution value of information amount of each pixel point in the rectangular box by the corresponding weight value and then summarizing the weighted distribution values of information amount, to obtain the distribution value of information amount in the rectangular box — 405

selecting the rectangular box with the largest distribution value of information amount, and intercepting a content of an image corresponding to the selected rectangular box to obtain a thumbnail of the image — 406

Fig. 4a

Fig. 4b

Fig. 5a

Fig. 5b

Fig. 6

**EP 2 890 105 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013069341 PCT